# EUROPEAN PATENT APPLICATION

(11) **EP 2 508 954 A1**
(43) Date of publication of application: **10.10.2012**
(21) Application number: 11002870.1
(22) Date of filing: 06.04.2011
(51) Int. Cl.: G05B 19/418

(54) **System and method for the configuration of a clustered simulation network**

(71) Applicant: ABB Technology AG, 8050 Zürich (CH)
(72) Inventor: Greifeneder, Jürgen, Dr., 68259 Mannheim (DE); Hoernicke, Mario, 76829 Landau (DE); Gramberg, Oliver, 8002 Zürich (CH)

(57) **Abstract**

The invention refers to a system and a method for configuring a clustered simulation network using virtualization whereas
a user configures the access to the main engineering personal computer (PC) being used for the plant solution;
the user configures the physical host PCs which are used for performing the virtual machines containing the simulators,
the user selects the objects that should be simulated and
based on the engineering data that the engineering PC provides, a framework application is provided to configure the required simulators, the required network interface, and the required IP addresses as well as the load balancing of the simulation tools, the required number of virtual machines, finally performing the simulators, and the distribution of virtual machines to the physical PCs.

## Description

The invention refers to a system for the configuration of a clustered simulation network which provides a domain- and technology- independent simulation framework to engineer and configure a clustered simulation network from a single point of access, by utilizing virtualization technology for the purpose of distribution, automatic configuration and load management and a method for the same.

Simulation is widely used during factory acceptance testing (FAT hereafter) of process and manufacturing plants to check for the functionality and to verify the plant solution when the control, device and subsystem hardware is still not available and devices are not present.

Usually, there are different simulation tools being used for different automation technologies, e.g. for IEC61850 which is a standard for the design of electrical substation automation, in particular a general communications protocol for protection and process control, and are used for subsystem and device simulation and distributed control system (DCS hereafter) simulation.

However there is no system and method known that provides an efficient configuration method of different simulation technologies from a single platform or simulation configuration framework.

### State of the art

Simulation tools for process and manufacturing plants are nowadays widely used in order to provide a test platform for the developed solutions before the subsystems and devices are present. For several types of devices, like controllers, programmable logic controllers (PLC), field busses and other kinds of physical systems inside a plant automation system, different simulators or emulators are available to provide a software representation for the physical device.

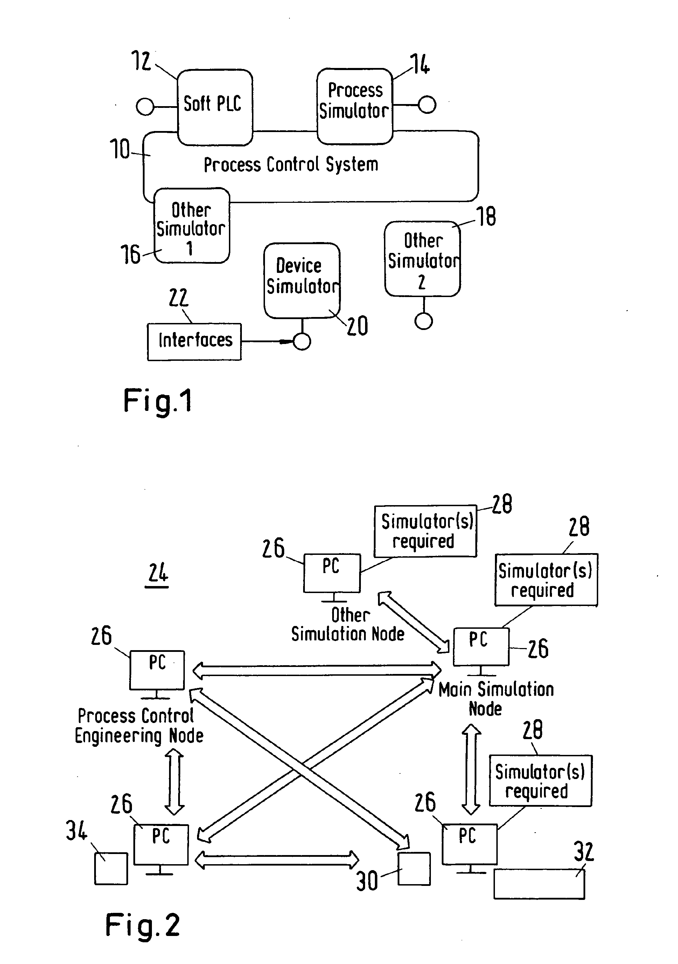

These tools are sometimes connected to the process control system and sometimes not. Each of those tools provides different interfaces for connection to other simulation tools or higher order process simulators, as shown in Fig 1.

Therefore, there is no common interface to the simulators and there is no common configuration method to deploy the simulators for the purpose of FAT or virtual commissioning.

Even worse is the fact that the user of the simulation tools has to configure and execute each simulator separately and with a proprietary graphical user interface (GUI). That means there is a usability problem regarding the engineering and deployment of the simulators: There is no common point of access to the configuration interface of the simulators.

For larger plant solutions, the user has to split the simulation into different parts and deploy the tools on several PCs in order to have enough processing power for the simulation. This results in a network of simulators that is clustered to several PCs. Each of those PCs has to provide the required hardware to execute the simulator(s).

This perhaps means that several network adapters, e.g. Ethernet cards, have to be installed and these adapters have to be configured to be placed in the correct network. Thus, in addition to the usability problem, the user has to take care of the distribution of the simulators, the PC hardware required to execute them and the network setup of the simulation PCs.

The current process has a variety of drawbacks which are listed in the following:
1. It is hard to synchronize control and orchestration commands between the simulators.
2. There is no defined process for developing the simulation network. The configuration depends on the engineer developing it. This can lead to inconsistencies between the PCs, the real hardware and the simulation.
3. Special hardware has to be provided, at least a bunch of Ethernet cards, in order to make the simulators executable and working on the simulation PCs.
4. There is a lot of manual work for configuring the simulation network and the hardware that is required for the simulators.
5. A lot of physical PCs are required for large solutions, because of the hardware interfaces required for the simulators. This is usually not a performance or memory problem, but a connectivity problem - missing network interfaces (NIC hereafter) or not enough Peripheral Component Interconnect (PCI) slots on the mainboard to increase the number of NIC.
6. There is a very bad usability, because every simulator provides a special GUI that is tailored for it and not for the user's needs.
7. The simulation tools provide different functionality: e.g. a simulator can be frozen, another one cannot be frozen. This leads to technology problems and inconsistencies during runtime - e.g. one simulator is performed, another one is frozen, but both need to communicate to each other during operation.
8. Every simulator has to be configured with its own data and separately. There is no way to make a bulk configuration of all executed simulators, although the required information is present.
9. Several systems have to be set up on different systems and the software must be kept to the same version on each of them.

Keeping this in mind and being aware of the problems with performing the simulation of a clustered simulation network it is a main objective of the invention to generate a system and method for the engineering and configuration of such clustered simulation network using virtualization which provides easy access and control for a user.

From EP1906377 A1 a system and method for integrating a process control system into a training simulator has been known whereas the system has a training simulator that interacts with a virtual personal computer (VPC), such that the functionalities for a simulation are actuated through an interface. The virtual PC stores a piece of software for modeling a technical installation or a technical process, and for modelling the user interface of a process control system.

Furthermore a method and installation for complete simulation or simulation in part and/or simulation of an automated system has been discussed internally whereas a real automation device is substituted by a simulated device in that way that a modified or an unmodified software of the real device is implementable or feasible by means of an emulation and/or virtualization environment.

### Description of the invention

Correspondingly the present invention is related to a method and a system providing a domain- and technology- independent simulation framework to engineer and configure a clustered simulation network from a single point of access, by utilizing virtualization technology for the purpose of distribution, automatic configuration and load management according to claims 1 and 16

To that effect the system according to the invention comprises the following measu res
- a user configures the access to the main engineering personal computer (PC) being used for the plant solution;
- the user configures the physical host PCs which are used for performing the virtual machines containing the simulators,
- the user selects the objects that should be simulated and
- based on the engineering data that the engineering PC provides, a framework application is provided to configure the required simulators, the required network interface, and the required IP addresses as well as the load balancing of the simulation tools, the required number of virtual machines, and the distribution of the simulation virtual machines to the physical PCs.

The main point of this invention is the use of virtualization technology for providing a method and a system for an efficient engineering and configuration of simulators that are located in a simulation network or cluster. These simulators can be of different types and do not necessarily have to provide the same interfaces and control functionality. Additionally, the simulators do not have to provide similar configuration methods. Hence, this is a very open method that can be used for several types of simulators.

According to a preferred embodiment of the claimed invention the system comprises the setup of the simulation network itself, the implementation of the configuration of the simulators into each simulator to set those up and make them performing the engineered control solution, the configuration of the communication between the simulators and finally perform the FAT on the simulation network.

According to another advantageous embodiment the engineering is being provided without any framework application whereas the user has a defined set of actions to be executed.

In an advantageous manner the user performs the orchestration commands either from the graphical user interface (GUI) of the virtual machine hypervisor or controls them remotely via a framework application.

In a further embodiment of the subject matter of the invention there is no need to buy, mount and configure special hardware, especially network adapters e.g. ethernet cards in the physical PC due to networks which are tunneled through the hypervisors hardware abstraction layer.

By these means it is possible to base the engineering on a defined standard workflow for all simulation tools whereas every simulation tool inside the framework can be engineered by the simulation engineer being familiar with that.

A further advantageous embodiment of the system according to the invention provides an appropriate load balancing which is calculated to distribute the virtual machines executing the simulators to several host PCs whereas the appropriate load balancing of the simulation tools inside the virtual machines being assigned to a specific host PC is calculated.

Furthermore the simulation tools inside the VMs may be instantiated according to the load balancing scheme or as defined by the user whereas a minimum number of host PCs required to perform the simulation is calculated by means of predefined metrics.

According to another embodiment of the invention preferably the simulators' control commands are utilized to distribute and synchronize the simulators throughout the simulation network whereas the virtual machine hypervisor's orchestration commands are utilized to extend existing simulation tools with further control functionality. In an advantageous manner the configuration of a clustered simulation network provides communication between the orchestration interface and the simulation tools whereas the virtual machine hypervisor is provided in a networked manner.

Likewise the system according to another preferred embodiment of the invention is characterized in that the simulators or simulation VMs or physical PCs are added or removed from the simulation network while the simulation is executed without stopping or interrupting the execution of the simulation.

According to a further feature of the claimed invention a method is proposed whereas
- the access to a main engineering PC being used for the plant solution is configured by a user;
- the physical host PCs being used for performing the virtual machines containing the simulators is configured by the user; too;
- the objects that should be simulated are selected by the user and
- based on the engineering data provided by the engineering PC the required simulators, the required network interface, and the required IP addresses, as well as the configuration of the virtual PC(s) and the virtual hardware and simulators are extracted.

A further preferred embodiment of the claimed method is characterized in that in a first step the simulation network itself is set up, then the configuration of the simulators is put into each simulator to set those up and make them performing the engineered control solution, then the communication between the simulators is configured and finally the test procedures, verification and validation of the solution can be performed.

According to another advantageous embodiment the orchestration is performed by the user from the graphical user interface (GUI) of the virtual machine hypervisor or remotely controlled via a framework application.

In particular there is no need to buy, mount and configure special hardware, especially network adapters e.g. Ethernet cards in the physical PC due to networks which are tunneled through the hypervisors hardware abstraction layer.

According to another preferred embodiment of the claimed invention the engineering is based on a defined standard workflow for all simulation tools whereas every simulation tool inside the framework is provided to be engineered by the simulation engineer being familiar with that.

Advantageously the engineering is being provided without any framework application whereas a defined set of actions has to be executed by the user. Another embodiment of the invention provides that there is no need to buy, mount and configure special hardware, especially network adapters e.g. ethernet cards in the physical PC due to networks which are tunneled through the hypervisors hardware abstraction layer.

Likewise the engineering can be based preferably on a defined standard workflow for all simulation tools and whereas every simulation tool inside the framework can be engineered by the simulation engineer being familiar with that.

Another preferred embodiment of the invention provides that an appropriate load balancing is calculated to distribute the virtual machines executing the simulators to several host PCs whereas an appropriate load balancing of the simulation tools inside the virtual machines being assigned to a specific host PC is calculated.

Furthermore the simulation tools inside the VMs may be instantiated according to the load balancing scheme or as defined by the user.

Another preferred embodiment of the invention provides a minimum number of host PCs required to perform the simulation is calculated by means of predefined metrics.

Likewise the simulators' control commands are utilized to distribute and synchronize the simulators throughout the simulation network.

According to another preferred embodiment of the claimed invention the virtual machine hypervisor's orchestration commands can be utilized to extend existing simulation tools with further control functionality.

An advantageous method for the configuration of a clustered simulation network provides communication between the orchestration interface and the simulation tools and the virtual machine hypervisors being provided in a networked manner.

Another method according to one preferred embodiment of the inventionprovides simulators or simulation VMs or physical PCs which are added or removed from the simulation network while the simulation is executed without stopping or interrupting the execution of the simulation.

### Detailed description of the invention

For the virtualization it is useful to provide a standard PC where the simulators are installed. Hence this virtual machine (VM) is provided as template and can therefore easily be shared across several PCs or can be instantiated on a single PC multiple times. If any new simulation tool has to be integrated, it is installed in the virtual machine and a simple plug-in infrastructure shows the framework that the simulation tool is present now and can be used for the simulation of a device or network engineered in a plant solution.

If a simulator is required, either the virtual machine is just executed, or a copy or clone is made and a new "instance" of the simulator is created. By doing so, the simulators are automatically multiplied and can be executed by executing the VM.

For the engineering part, virtualization provides an appropriate infrastructure, which can be used to manually or automatically configure and use virtual network adapters and other hardware that is required for the simulator.

Most simulators require a network interface controller (NIC) in order to operate properly and to be executable on a PC. These NIC, in particular Ethernet cards, easily can be added without changing hardware of the physical PC. The simulation PC is mostly independent from the hardware of its host PC. This makes the simulation very flexible and easy to extend with further simulators and easy to change the NIC of a simulation PC.

In addition to the easy change of the virtual hardware, the virtual PC or virtual PCs performing the simulation can easily being preconfigured and distributed to several physical host PCs. By simply copying the virtual machine to a different PC, the simulation can be performed there without changing anything in the virtual machine, the hardware of the host PC, or the configuration of both. The simulation will perform directly with only very minor changes in the hypervisor or even without any changes.

Additionally, the virtualization technology is used to extend the existing simulator functionality by some standard functions. Usually, a virtualization hypervisor is able to save snapshots, suspend a virtual machine or to pause a virtual machine. By processing these commands on the virtual machine using the hypervisor, the simulation tools that are executed inside the virtual machine perform the same actions without changing the functionality of those. That means there is an easy way to make a simulation tool able to store snapshots, suspend and pause simulation without touching the functionality of the simulation tool itself.

All this leads to a standard method that can be used to configure simulation solutions of a plant:
- The user configures the physical PCs that shall be used for the simulation.
- The user configures the access to the engineering PC containing the information about the control, device and subsystem solution and the corresponding logic behind that.
- The user chooses the objects that shall be simulated within the simulation network.
- The simulation framework takes care of evaluating the data gather from the engineering PC and calculates the required virtual Ethernet cards, IP addresses and virtual machines required for the objects to be simulated.
- The framework automatically distributes the simulators on the virtual machines or virtual machine instance and distributes the virtual machines on the given physical PCs

Once the simulation network itself is set up, the user can put the configuration of the simulators into the simulators to set them up and make them performing the engineered control solution. Additionally, the communication between the simulators should immediately work, because the framework already deployed the virtual Ethernet cards and set the IP addresses of those. Then the test, verification and validation of the plant solution can begin.

The user performs the orchestration commands either from the GUI of the virtual machine hypervisor or remote controls them via a framework application.

In the following some specific advantages of the invention are made up.
1. There is no need to buy, mount and configure special hardware, e.g. Ethernet cards in the physical PC - networks and other PC hardware dependent stuff is tunneled through the hypervisors hardware abstraction layer.
2. Engineering bases on a defined standard workflow for all simulation tools. Once the simulation engineer is familiar with it, he can engineer every simulation tool inside the framework.
3. Most steps of the configuration can be automated, which increases efficiency of the simulation configuration.
4. Simulators can be configured with the required data from a single point -most configurations can be done automatically and the look and feel of the simulation tools is the same for each simulator.
5. Missing functionality is "upgraded" by using the hypervisor to perform orchestration actions (suspend, pause, take snapshots, etc.).
6. Much better usability by providing a framework application that is tailored for the user and not for the simulation functionality. Additionally, the GUI is the same for all simulators.
7. Orchestration commands can be synchronized using the hypervisors functionality -at least for the orchestration commands provided by the hypervisor.
8. Simple algorithms can be used to calculate a load balancing of the physical PCs and the virtual machines.
9. The described method is very flexible and is open enough to integrate several different kinds of simulation technologies across technology borders.

By means of the examples disclosing possible layouts respectively of ways of carrying out the invention, preferred embodiments of the invention as well as corresponding advantages shall be illustrated in the following drawings.

It is shown in
- Fig. 1: State of the art: Simulation Tools,
- Fig. 2: Example of a very small and simple simulation network for a plant solution,
- Fig. 3: Process of configuring Simulation using virtual machines.

With the exception of Fig. 1 which reveals the state of the art all other drawings show some preferred embodiments of the invention.

Fig. 1 shows a representative arrangement of tools for simulation of processes and/or manufacturing plants according to the state of the art consisting of a process control system 10 whereas some components e.g. "SoftPLC" 12, "Process Simulator" 14, "Other Simulator 1" 16 , "Other Simulator 2" 18 , and "Device Simulator" 20 are provided with interfaces 22 in order to be enabled to cooperate.

Herewith it is a problem that the user of the simulation tools has to configure and execute each simulator separately and with a proprietary graphical user interface. That means there is a usability problem regarding the engineering and deployment of the simulators: There is no common point of access to the engineering interface of the simulators.

For larger plant solutions, the user has to split the simulation into different parts and deploy the tools on several PCs in order to have enough processing power for the simulation. This results in a network of simulators that is clustered to several PCs.

Fig. 2 shows an example of such simulation network 24 for a plant solution according to the invention which is rather small and simple. It comprises a number of PCs (personal computers) 26 whereas each of the PCs 26 is being used for this simulation network 24 has to provide the required hardware to execute the simulation.

Thus, in addition to the usability problem, the user has to take care of the distribution of simulators 28 whereas each is established in a PC 26. Accordingly the PC 26 respectively its hardware is required to execute the simulation as well as the network setup of the simulation PCs 26. Furthermore there may be a simulation operator 30. another simulation node 32 and another process control node 34.

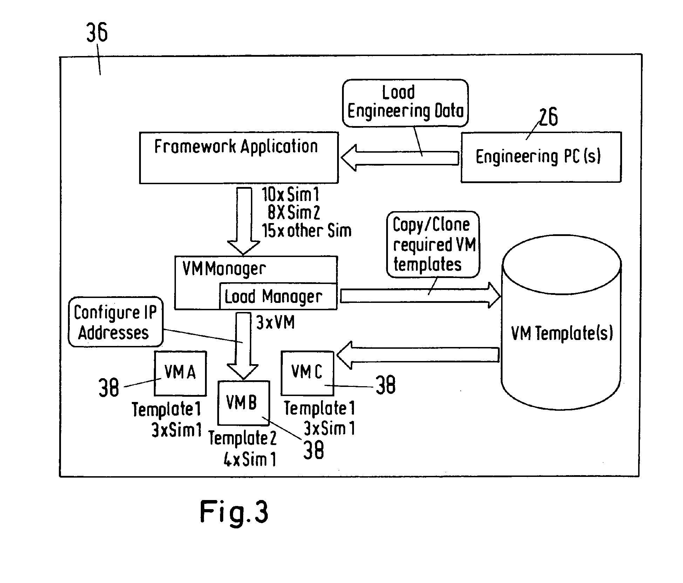

Finally, Fig. 3 shows an arrangement 36 of the specific components and tools being used for simulation according to the invention whereas a user-defined number of virtual machines 38 (VMA, VMB, VMC) are used which are installed in one main engineering PC used for the plant solution.

Furthermore there is a standard method that can be used to engineer simulation solutions of a plant. Accordingly within the arrangement 36 the different tools such as a "Load Manager" within a "VM Manager" and process steps such as "load engineering Data" or "copa/clone required VM template" are depicted.

Firstly the user configures the access to the main engineering PC 26 used for the plant solution. Then the user configures the physical host PCs that are used for performing the virtual machines 38 containing the simulators - only the physical PC, not the virtual machines.

After that the user selects the objects that should be simulated and then based on the engineering data provided by the engineering PC, a framework application is being provided to configure the required simulators, the required network interface, and the required IP addresses as well as the load balancing of the simulation tools, the required number of virtual machines, and the distribution of virtual machines to the physical PCs.

## Claims

1. System for engineering a clustered simulation network using virtualization whereas
• a user configures the access to the main engineering personal computer (PC) being used for the plant solution;
• the user configures the physical host PCs which are used for performing the virtual machines containing the simulators,
• the user selects the objects that should be simulated and
• based on the engineering data that the engineering PC provides, a framework application is provided to configure the required simulators, the required network interface, the required virtual PCs and virtual hardware, and the required IP addresses.

2. System according to claim 1, whereas the required number of virtual machines, performing the simulation tools, and the distribution of virtual machines to the physical PCs are configured by a framework application.

3. System according to claim 1 or 2, comprising the setup of the simulation network itself, the implementation of the configuration of the simulators into each simulator to set those up and make them performing the engineered control solution and the configuration of the communication between the simulators.

4. System according to one of the claims 1 to 3, whereas the engineering is being provided without any framework application and whereas the user has a defined set of actions to be executed.

5. System according to one of the claims 1 to 3, whereas the user performs the orchestration commands either from the graphical user interface (GUI) of the virtual machine hypervisor or controls them remotely via a framework application.

6. System according to one of the previous claims, whereas there is no need to buy, mount and configure special PC hardware, especially network adapters e.g. Ethernet cards in the physical PC due to networks which are tunneled through the hypervisors hardware abstraction layer.

7. System according to one of the previous claims, whereas engineering is based on a defined standard workflow for all simulation tools and whereas every simulation tool inside the framework can be engineered by the simulation engineer being familiar with that.

8. System according to one of the previous claims, whereas an appropriate load balancing is calculated to distribute the virtual machines executing the simulators to several host PCs.

9. System according to claim 7 or 8, whereas an appropriate load balancing of the simulation tools inside the virtual machines being assigned to a specific host PC is calculated.

10. System according to one of the claims 7 to 9, whereas the simulation tools inside the VMs are instantiated according to the load balancing scheme or as defined by the user.

11. System according to one of the previous claims 7 to 10, whereas a minimum number of host PCs required to perform the simulation is calculated by means of predefined metrics.

12. System according to one of the previous claims 7 to 11, whereas the simulators' control commands are utilized to distribute and synchronize the simulators throughout the simulation network.

13. System according to claim 12, whereas the virtual machine hypervisor's orchestration commands are utilized to extend existing simulation tools with further control functionality.

14. System according to one of the previous claims 1 to 13, for the configuration of a clustered simulation network whereas communication between the orchestration interface and the simulation tools and the virtual machine hypervisors is provided in a networked manner.

15. System according to one of the previous claims 1 to 14, whereas simulators or simulation VMs or physical PCs are added or removed from the simulation network while the simulation is executed without stopping or interrupting the execution of the simulation.

## Amended claims

### Amended claims in accordance with Rule 137(2) EPC.

**1.** System for engineering a clustered simulation network using virtualization which system is comprising
• a user-configured access to the main engineering personal computer (PC) being used for the plant solution;
• user-configured physical host PCs which being used for performing virtual machines (VMs) containing simulators,
• user-selected objects that should be simulated and
• a framework application, which is based on engineering data received from the engineering PC and provided for configuration of the required simulators, a required network interface, required virtual PCs and virtual hardware, and required IP addresses,
• whereas the framework application configures a required number of virtual machines (VMs), performing simulation tools, and the distribution of virtual machines VMs) to the physical PCs whereas the simulators can be of different types and do not necessarily have to provide the same interfaces and control functionality.

**2.** System according to claim 1, comprising the setup of the simulation network itself, the implementation of the configuration of the simulators into each simulator to set those up and make them performing the engineered control solution and the configuration of the communication between the simulators.

**3.** System according to one of the claims 1 or 2, whereas the user performs the orchestration commands either from the graphical user interface (GUI) of a virtual machine hypervisor or controls them remotely via the framework application.

**4.** System according to one of the previous claims, whereas the components for the clustered simulation network comprise standard PC hardware, standard "network adapters, in particular Ethernet cards in the physical PC, due to networks which are tunneled through the hypervisors hardware abstraction layer.

**5.** System according to one of the previous claims, whereas engineering is based on a defined standard workflow for all simulation tools.

**6.** System according to one of the previous claims, whereas an appropriate load balancing is calculated to distribute the virtual machines (VMs) executing the simulators to several host PCs.

**7.** System according to claim 6, whereas an appropriate load balancing of the simulation tools inside the virtual machines (VMs) being assigned to a specific host PC is calculated.

**8.** System according to one of the claims 5 to 7, whereas the simulation tools inside the (VMs) are instantiated according to the load balancing scheme or as defined.

**9.** System according to one of the previous claims 5 to 8, whereas a minimum number of host PCs required to perform the simulation is calculated by means of predefined metrics.

**10.** System according to one of the previous claims 5 to 9, whereas the simulators' control commands are utilized to distribute and synchronize the simulators throughout the simulation network.

**11.** System according to claim 10, whereas the virtual machine hypervisor's orchestration commands are utilized to extend existing simulation tools with further control functionality.

**12.** System according to one of the previous claims 1 to 11, for the configuration of a clustered simulation network whereas communication between the orchestration interface and the simulation tools and the virtual machine hypervisors is provided in a networked manner.

**13.** System according to one of the previous claims 1 to 12, whereas simulators or simulation (VMs) or physical PCs are added or removed from the simulation network while the simulation is executed without stopping or interrupting the execution of the simulation.

**14.** Method for engineering a clustered simulation network using virtualization whereas
• a user-configured access to a main engineering computer (PC) being used for a plant solution is configured;
• user-configured physical host PCs which being used for performing the virtual machines (VMs) containing simulators, is configured;
• user-configured objects that should be simulated are selected and
• based on the engineering data provided by the engineering PC required simulators, a required network interface, required virtual PC's and required IP addresses as well as the configuration of the virtual PC(s) and a virtual hardware are extracted by a framework application,
• whereas the required number of virtual machines (VMs), performing simulation tools, and the distribution of virtual machines (VMs) to the physical PCs are configured by the framework application, whereas the simulators can be of different types and do not necessarily have to provide the same interfaces and control functionality.

**15.** Method according to claim 14, whereas in a first step the simulation network itself is set up, then the configuration of the simulators is put into each simulator to set those up and make them performing the engineered control solution, then the communication between the simulators is configured.

**16.** Method according to one of the claims 14 or 15, whereas the orchestration is being performed from the graphical user interface (GUI) of a virtual machine hypervisor or remotely controlled via the framework application.
